# EUROPÄISCHE PATENTSCHRIFT

(11) **EP 2 350 471 B1**
(45) Veröffentlichungstag und Bekanntmachung des Hinweises auf die Patenterteilung: **27.07.2016**
(21) Anmeldenummer: 09744596.9
(22) Anmeldetag: 21.09.2009
(51) Int. Cl.: F16B 5/02, F16B 13/08, F16B 13/14

(54) **DÜBEL MIT RÄUMSTEGEN**
DOWEL WITH CLEARANCE GROOVES
CHEVILLE POSSÉDANT DES NERVURES DE NETTOYAGE

(30) Priorität: 22.09.2008 DE 102008048387
(43) Veröffentlichungstag der Anmeldung: 03.08.2011
(73) Patentinhaber: Zimmer, Günther, 77866 Rheinau (DE); Zimmer, Martin, 77866 Rheinau (DE)
(72) Erfinder: Zimmer, Günther, 77866 Rheinau (DE); Zimmer, Martin, 77866 Rheinau (DE)
(74) Vertreter: Thämer, Wolfgang
(86) Internationale Anmeldenummer: PCT/DE2009/001304
(87) Internationale Veröffentlichungsnummer: WO 2010/031393

(56) Entgegenhaltungen:
- DE-A1-102006 049 954
- DE-A1-102008 010 730
- DE-U1- 20 002 016

## Beschreibung

Die Erfindung betrifft einen Dübel zur Verwendung in einer mit einer oberen und unteren Deckplatte ausgestatteten Leichtbauplatte aus einem mit einem Boden versehenen Zylinderkörper, einem Verdrängerkörper und einem mit Sollbruchstellen ausgestatteten Klebstoffbehälter, wobei der Zylinderkörper mindestens zwei Hintergriffselemente aufweist, die durch das Einschieben des Verdrängerkörpers in eine Bohrung der Leichtbauplatte, die obere Deckplatte hintergreifend, aufgespreizt werden und wobei der Klebstoffbehälter in einem mit mehreren Öffnungen versehenen Innenraum des Zylinderkörpers sitzt.

Die Leichtbauplatten, oft auch als Sandwichplatten oder Wabenplatten bezeichnet, haben im Möbelbau in der Regel formsteife Decklagen aus Dünnspanplatten, mittel- oder hochdichten Faserplatten, Sperrholz- oder Hartfaserplatten. Die Sandwichplatten haben dabei als Mittelschicht bzw. Stützkern z.B. Polyurethan-Schaum oder Polystyrol. Bei den Wabenplatten werden als Zwischenlagen oft Wellstegeinlagen oder sog. expandierte Honigwaben eingesetzt. Die meisten Leichtbauplatten haben eine Rohdichte, die unter 500 kg/m³ liegt. Werden für die Zwischenlage keine brandhemmenden Aluminiumschäume oder Blähglas verwendet, liegt die Rohdichte unter 350 kg/m³. Zum Vergleich beträgt die Rohdichte einer unbeschichteten Spanplatte ca. 600 bis 750 kg/m³.

Sollen an Leichtbauplatten Beschläge, z.B. durch Anschrauben, befestigt werden, hat man das Problem, dass die Befestigungsmittel in der Regel nur an der relativ dünnen oberen Decklage bzw. Deckplatte Halt finden.

Dazu wird in der DE 10 2008 010 734 A1 ein mindestens zweiteiliger Dübel beschrieben, bei dem mindestens zwei größere Dübelbauteile während der Dübelmontage ineinander geschoben werden. Ein zumindest bereichsweise topfförmiges Bauteil hat hierbei die Funktion eines Zylinders, während ein zapfenartiges Bauteil die Funktion eines Kolbens übernimmt. Im Boden des topfförmigen Bauteils liegt eine Klebstoffpatrone, die beim Zusammenschieben der beiden genannten Dübelbauteile oben und unten aufreißt.

Des Weiterten ist aus der DE 10 2006 049 954 A1 ein Dübel für einen Deckplattenhinter- und Eingriff bekannt. Dieser für Leichtbauplatten geeignete Dübel besteht aus einem Spreizkörper und einem darin verrastbaren Keilkörper. Beim nicht montierten Dübel befindet sich zwischen dem Keilkörper und dem hohlen Spreizkörper ein Klebstoffballon, der beim Setzen des Dübels seinen Klebstoff freisetzt.

Der vorliegenden Erfindung liegt das Problem zugrunde, einen Klebedübel für Leichtbauplatten zu entwickeln, der bei einfacher Montage fest, sicher und dauerhaft in der Leichtbauplatte hält.

Das Problem wird mit den Merkmalen des Anspruchs 1 gelöst. Dabei ist der befüllte Klebstoffbehälter im Handelszustand im Zylinderkörper zwischen dem Boden und dem Verdrängerkörper angeordnet. Der Verdrängerkörper und der Zylinderkörper weisen über einen Teilbereich ihrer Länge eine wellen-Naben-Verbindung auf, um eine drehstarre längsbewegliche Kupplung zu bilden. An der Außenseite des Bodens ist mindestens ein Räumsteg angeordnet, durch den beim Dübelsetzvorgang durch ein Rotieren des Dübels die untere Deckplatte in dem Bereich, der unter dem Boden des Dübels liegt, also an der Stelle, an der der Boden mit der Deckplatte verklebt wird, reinigbar ist. Der mindestens eine Räumsteg erstreckt sich von innen nach außen, wobei er innen an einer zentralen Ausnehmung beginnt und außen im Bereich der Außenwandung des Bodens endet.

Mit der Erfindung wird ein sog. hydraulischer Klebedübel vorgestellt, der im Prinzip wie eine Zylinder-Kolben-Einheit aufgebaut ist. Im Handelszustand ist der Zylinder mit einem in einem Ein- oder Mehrkammerbehälter bevorrateten fließfähigen Klebstoff befüllt. Wird nun der Klebedübel in eine Bohrung einer Leichtbauplatte gesteckt und dort der Verdrängerkörper in den Zylinderkörper geschoben, wird zunächst der Klebstoffbehälter oben durch den Verdrängerkörper aufgestoßen. Der in den Klebstoffbehälter eindringende Verdrängerkörper verdrängt den Klebstoff entgegen der Bewegungsrichtung des Verdrängerkörpers in den Bereich unterhalb der oberen Deckplatte. Bei der weiteren Vorwärtsbewegung des Verdrängerkörpers drückt dieser den Klebstoffbehälter so gegen den Zylinderboden, dass der Klebstoffbehälter unten aufreißt. Der Verdrängerkörper schiebt nun einen restlichen Klebstoff durch Öffnungen des unteren Zylinderbereichs in den um das untere Dübelende gelegenen Bereich. Bei der Vorwärtsbewegung des Verdrängerkörpers wird der noch fließfähige Klebstoff über Bohrungen oder Kanäle dorthin geleitet, wo er zum Halten des Dübels in der Leichtbauplatte benötigt wird. Nach dem teleskopartigen Zusammenschieben des Zylinderkörpers und des Verdrängerkörpers härtet der Klebstoff aus und fixiert den Dübel dauerhaft in der Leichtbauplatte. Gleichzeitig wird auch der Verdrängerkörper mit dem Zylinderkörper verklebt.

Um ein sicheres Haften des Klebedübels an der unteren Deckplatte der Leichtbauplatte sicherzustellen, wird die Deckplatte in dem Bereich, der unter dem Boden des Dübels liegt, also an der Stelle, an der der Boden mit der Deckplatte verklebt wird, mit speziellen Räumstegen gereinigt bzw. von losen Bohrrückständen befreit. Die Räumstege sitzen am Boden des Zylinderkörpers. Um das Räumen zu realisieren, rotiert der Klebedübel während des Setzvorganges, zumindest auf der letzten Strecke seines Setzhubs. Da der Klebedübel bei der Montage am Verdrängerkörper maschinell geführt und gehalten wird, sind der Verdrängerkörper und der Zylinderkörper mittels einer drehstarren, längsbeweglichen Kupplung miteinander verbunden.

Weitere Einzelheiten der Erfindung ergeben sich aus den Unteransprüchen und den nachfolgenden Beschreibungen schematisch dargestellter Ausführungsformen.
- Figur 1:: Perspektivische Explosionsdarstellung des Dübels;
- Figur 2:: Perspektivische Darstellung des Dübels in der Handelsform;
- Figur 3:: wie Figur 2, jedoch im zusammengeschobenen Zustand;
- Figur 4:: Längsschnitt des in einer Leichtbauplatte eingesetzten Dübels aus Figur 2;
- Figur 5:: Teilquerschnitt zu Figur 4 mit kraftschlüssiger Kupplung;
- Figur 6:: Teilquerschnitt zu Figur 4 mit formschlüssiger Kupplung;
- Figur 7:: wie Figur 4, jedoch nach dem Einschiebehub;
- Figur 8:: Seitenansicht des Bodens;
- Figur 9:: Draufsicht auf den Boden;
- Figur 10:: Perspektivische Draufsicht auf den Boden;
- Figur 11:: Unteransicht des Bodens;
- Figur 12:: Unteransicht des Bodens, der Räumstege mit anderem Anstellwinkel hat;
- Figur 13:: Unteransicht des Bodens mit anderen Räumstegen.

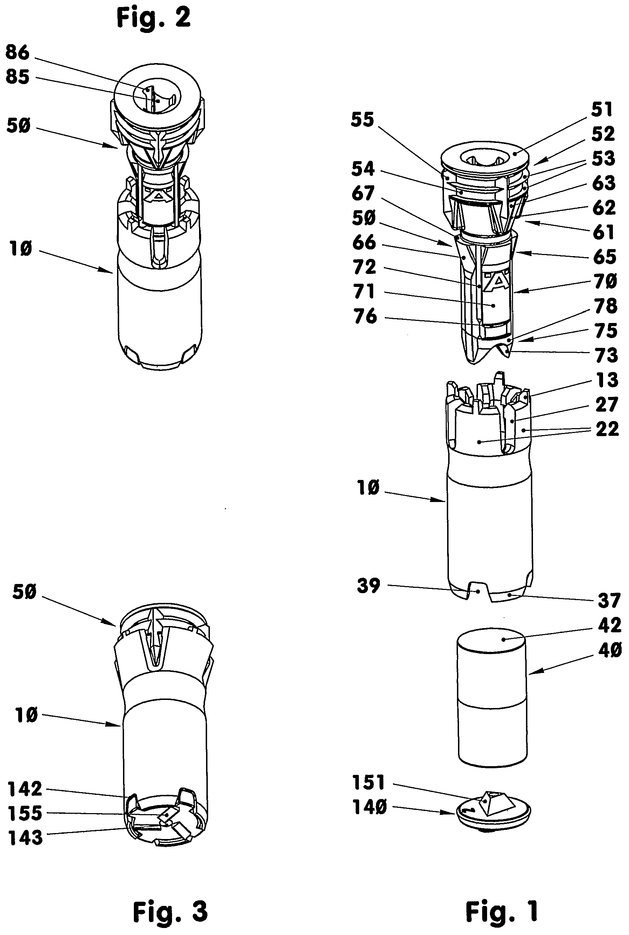

Die Figur 1 zeigt alle Bauteile eines Klebedübels in Explosionsdarstellung, einen Zylinderkörper (10), einen Verdrängerkörper (50), einen Klebstoffbehälter (40) mit z.B. zwei Kammern und einen Boden (140). Alle Bauteile werden über einen Zylinderkörper (10) zusammengehalten. Von oben her wird der Verdrängerkörper (50) verrastet ein Stück weit in den Zylinderkörper (10) eingesteckt, vgl. Figur 2. Von unten her wird in den Zylinderkörper (10) der Klebstoffbehälter (40) eingeschoben und vom Boden (140) festgehalten. Dieser Klebstoffdübel wird während des Einsetzens in die Leichtbauplatte (100) von einer - nicht dargestellten - Setzmaschine zeitweise in eine Rotationsbewegung versetzt. Die Rotation erfolgt um die Längsachse (5) des Klebedübels.

In Figur 2 ist der Klebedübel im Handelszustand dargestellt, während Figur 3 den Dübel im zusammengeschobenen Einbauzustand zeigt. Allerdings ist hier der aus den Öffnungen (16, 143) und den Montagefugen (142) herausquellende Klebstoff nicht dargestellt.

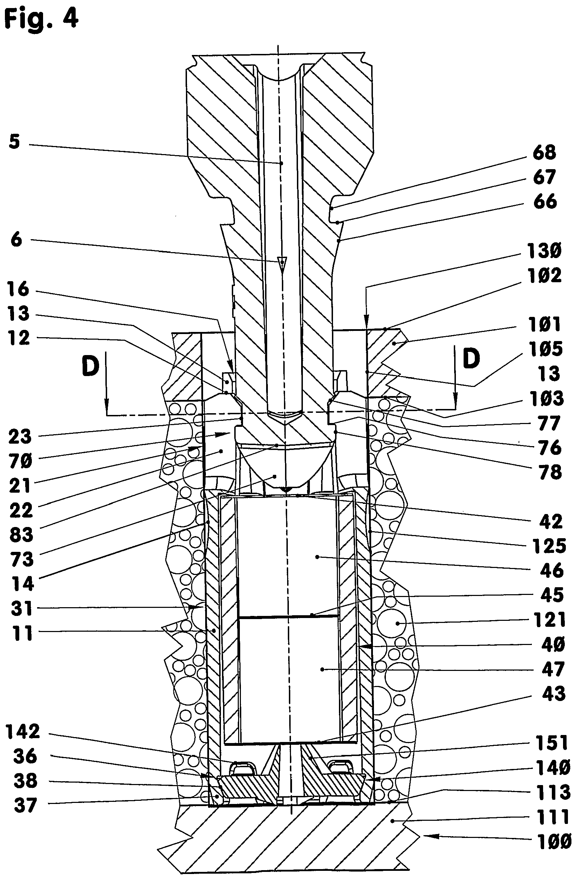

Die Figur 4 zeigt den Klebedübel nach den Figuren 1 bis 3 im Längsschnitt. Sein Zylinderkörper (10) steckt dabei in einer Leichtbauplatte (100).

Die in Figur 4 gezeigte Leichtbauplatte (100) umfasst zwei Deckplatten (101) und (111) und einen dazwischen liegenden Stützkern (121). Jede Deckplatte (101, 111) besteht im Ausführungsbeispiel aus einer Dünnspanplatte. Der Stützkern (121) ist hier z.B. ein PU-Schaumkern. Die Deckplatten (101, 111) sind mit ihren innen liegenden Oberflächen (103, 113) mit dem plattenförmigen Stützkern (121) verklebt. Die dargestellte Leichtbauplatte hat eine Wandstärke von 20 bis 40 Millimetern.

Jede Deckplatte ist z.B. 2 bis 8 Millimeter dick. Statt des Schaumkerns kann sie u.a. auch einen Wabenkern haben. In der Leichtbauplatte (100) befindet sich eine Bohrung (130), die sich aus den Abschnitten (105) und (125) zusammensetzt.

Die Leichtbauplatte (100) kann auch gewölbt, z.B. zylindrisch oder sphärisch, ausgeführt sein, sofern die Materialstärke des Stützkerns (121) zumindest annähernd konstant ist.

Um den Klebedübel montieren zu können, wird die erste Deckplatte (101) und der Stützkörper (121) auf- bzw. durchbohrt. Ggf. wird die zweite Deckplatte (111) zur vollständigen Beseitigung von Klebstoffresten, die an ihr (111) haften, geringfügig angefräst. Als Bohrwerkzeug wird beispielsweise ein Spiralbohrer benutzt, der einen Spitzenwinkel von 180 Winkelgraden aufweist. Ggf. kann auch ein Stirnsenker verwendet werden. Je nach Dübelbauart kann die Bohrung (130) auch mit einem Stufensenker gebohrt werden. Die entstandene Ausnehmung, bzw. Bohrung (130), wird beispielsweise mit Pressluft freigeblasen oder leergesaugt.

Der Zylinderkörper (10) ist zusammengebaut ein topfförmiges Bauteil, das aus einem Rohrabschnitt (11) und einem Boden (140) besteht. Im Ausführungsbeispiel sitzt der Boden (140) verklemmt im Rohrabschnitt (11). Die Verklemmung wirkt radial, axial und in Umfangsrichtung.

Der Rohrabschnitt (11) nach den Figuren 1 und 4, er ist beispielsweise aus dem Kunststoff ABS gefertigt, hat großteils eine zumindest annähernd zylindrische Außenwandung. Der Rohrabschnitt (11) besteht aus drei größeren Bereichen. Der erste Bereich ist der Hintergriffsbereich (21) mit der oberen Ausnehmung (16) bzw. Öffnung. Er ist im Ausführungsbeispiel mit vier z.B. geraden Längsschlitzen (27) ausgestattet, vgl. Figur 1. Die Längsschlitze (27) separieren vier z.B. gleichgroße Hintergriffselemente (22).

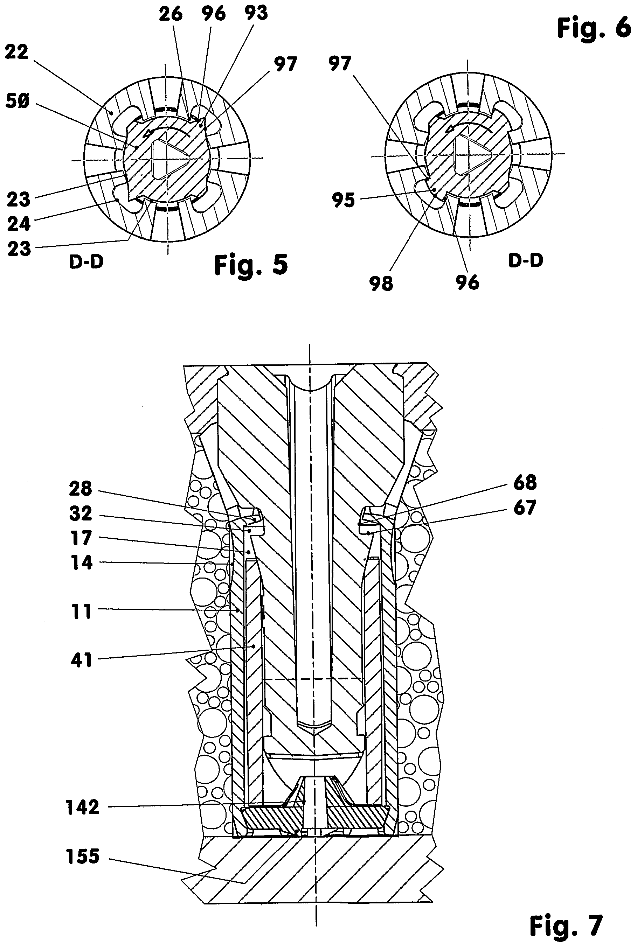

Jedes Hintergriffselement (22) besteht primär aus einem hakenförmigen Block, vgl. Figur 4, der über eine schmale, dünnwandige Gelenkzone (32), vgl. Figur 7, mit dem zweiten Bereich (31) des Rohrabschnitts (11) verbunden ist. Die Innenwandung der einzelnen Hintergriffselemente (22) umfasst zwei Stützflächen (23) und einen dazwischen liegenden Kanal (24), vgl. Figur 5. Die Stützflächen (23) sind zumindest annähernd Teilflächen eines Zylindermantels. Der Durchmesser des Zylindermantels im Bereich der Stützflächen (23) entspricht ca. dem halben maximalen Durchmesser der Außenwandung des Rohrabschnitts (11).

Die zwischen den Stützflächen (23) gelegenen Kanäle (24) haben einen ovalen Querschnitt, der zur Mittellinie (5) hin offen ist. Die Tiefe der Kanäle (24), gemessen gegenüber dem Zylindermantel der Stützflächen (23), beträgt z.B. 1 bis 1,2 mm.

Die Hintergriffselemente (22) haben auf den Stirnflächen (12) z.B. vier zumindest annähernd quaderförmige Führungszapfen (13), die an ihren Innenflächen angefast sind. Die Führungszapfen (13) schließen in Radialrichtung bündig mit der Außenwandung ab. Sie haben eine mittlere Wandstärke von ca. 1 mm. Hinter jedem Führungszapfen (13) liegt ein Kanal (24). Der jeweils rückwärtige Kanal (24) fördert - beim Dübel setzen - das nach innen Abknicken der Führungszapfen (13).

Das untere Ende der einzelnen Längsschlitze (27) hat eine besondere Ausgestaltung, vgl. Figur 7. Dort ist eine schmale, ca. 0,3 mm dicke, elastische Dichtzunge (28) angeformt, die nach innen gebogen ca. 1 mm - zumindest annähernd horizontal - in den Innenraum (17) hineinragt. Sie dient zugleich als oberer Anschlag zum Fixieren des Klebstoffbehälters (40), vgl. Figur 4.

Zwischen der Stirnfläche (12) und den Stützflächen (23) sowie den Kanälen (24) befindet sich z.B. eine 45°-Fase, an der nach Figur 4 bereichsweise der Verdrängerkörper (50) mit seinen hinteren Sperrflächen (77) anliegt. Zugleich kontaktiert der Verdrängerkörper (50) mit den Halteflächen (76) seiner Rastvorsprünge (78) die Hintergriffsflächen (25) der Hintergriffselemente (22).

Der zweite Bereich (31) des Rohrabschnitts (11) ist das Patronenlager. Dieser Bereich (31) hat eine zumindest annähernd zylindrische Innenwandung, die sich nach unten hin, vgl. Figur 4, geringfügig verbreitert. Die Wandung hat dort eine mittlere Wandstärke von z.B. 0,8 mm.

Die Außenwandung des Rohrabschnitts (11) hat z.B. im oberen Viertel eine Taille (14). Die Taille (14) hat die Form einer umlaufenden Ringnut. Der Einzelquerschnitt der Ringnut ist beispielsweise ein Kreisabschnitt, dessen Radius z.B. acht Millimeter beträgt. Im Bereich der Taille (14) ist die Wandstärke des Rohrabschnitts (11) um mindestens ein Drittel verringert. Auf diese Weise hat der Rohrabschnitt (11) im Taillenbereich eine höhere Elastizität als im darunter liegenden Zylinderbereich. Dadurch wird die für das Ausspreizen der Hintergriffselemente (22) erforderliche Nachgiebigkeit in der Gelenkzone (32) verbessert.

Der dritte Bereich (36) des Rohrabschnitts (11) ist der Bodenarretierbereich. Er besteht aus z.B. vier nach unten ragenden elastischen Zungen (37), vgl. auch Figuren 1 und 3, die durch kurze Längsschlitze (39) voneinander getrennt sind. An der Innenwandung der Zungen (37) befindet sich - auf den unteren beiden Dritteln der Zungen - eine Eindrehung (38), deren Hüllfläche einem Kegelstumpfmantel entspricht. Der Kegelstumpfmantel hat einen Kegelwinkel von 40 Winkelgraden. Die theoretische Spitze des Kegelstumpfmantels befindet sich - bei montiertem Dübel - unterhalb der unteren Deckplatte (111). Die Eindrehung (38) dient als Sitz für den Zylinderboden (140), vgl. Figuren 4 und 7.

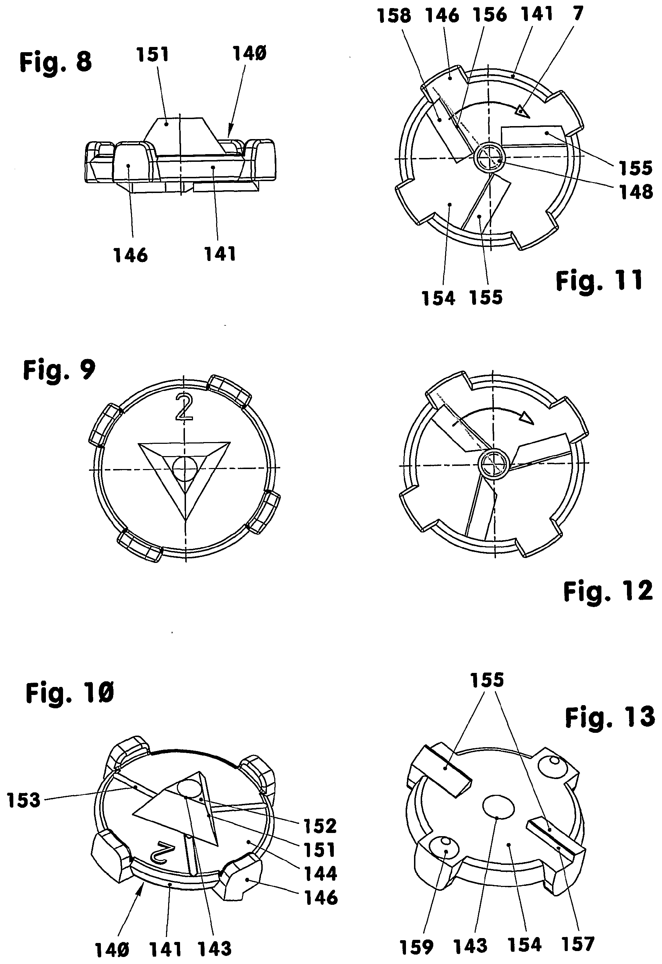

Der z.B. aus ABS gefertigte Zylinderboden (140) ist im Wesentlichen eine Scheibe mit einer großteils kegelstumpfförmigen Außenwandung (141), vgl. Figuren 8 bis 11. Er hat z.B. eine zentrale Ausnehmung (143). An der Außenwandung (141) sind beispielsweise vier Mitnahmelaschen (146) angeformt. Letztere stehen über die Außenwandung (141) über, um in entsprechende Aussparungen (39) des Rohrabschnitts (11) mit einem Spiel von 0,1 bis 0,3 Millimetern einzugreifen. Die Innen- und Außenwandungen der Mitnahmelaschen (146) schließen mit der Innen- und der Außenwandung zumindest bereichsweise bündig ab. Die Mitnahmelaschen (146) stehen über die Oberseite (144) ca. 0,9 Millimeter über. Der überstehende Teil der Mitnahmelaschen (146) verjüngt sich nach oben hin geringfügig.

An seiner Oberseite (144) weist der Boden (140) mittig einen Pyramidenstumpf (151) auf, dessen Grundfläche beispielsweise ein gleichseitiges Dreieck ist, vgl. Figur 10. Der Pyramidenstumpf (151) hat eine Höhe von ca. 2,25 Millimeter. Mittig wird der Pyramidenstumpf (151) von der Bohrung (143) durchdrungen. Die Kanten der Stumpfstirnfläche (152) tangieren den Rand der Bohrung (143). Der Umkreis der Stumpfstirnfläche (152) hat einen Durchmesser von z.B. 3 Millimeter, während die Grundfläche des Pyramidenstumpfes (151) einen Umkreisdurchmesser von ca. 6,2 Millimeter hat.

Ggf. befinden sich in der Oberseite (144) z.B. drei oder mehr Kanäle (153), die einen Querschnitt von jeweils mindestens zwei Quadratmillimeter haben. Sie verbinden den Pyramidenstumpf (151) mit der Außenwandung (141), um Klebstoff zwischen den Klebstoffbehälter (40) und den Rohrabschnitt (11) fördern zu können.

An seiner Unterseite (154) trägt der Boden (140) nach Figur 11 z.B. drei Räumstege (155). Die Räumstege (155), die 0,1 bis 0,3 Millimeter über die Unterkante des Rohrabschnitts (11) überstehen, haben die Aufgabe, die Stützkernkleber- und Stützkernreste, die nach dem Bohren in der Leichtbauplattenbohrung (130) verblieben sind, unterhalb des Dübelbodens (140) auf die Seite zu räumen.

Die Räumstege (155) haben z.B. einen dreieckigen oder trapezförmigen Querschnitt. Sie haben vorn eine Räumfläche (157) und rückseitig eine Freifläche (158). Die Räumfläche (157) und die Freifläche (158) treffen sich in einer Räumkante (156). Letztere kann ggf. auch eine schmale, langgestreckte Fläche sein.

Die Räumfläche (157) schließt mit der Unterseite (154) z.B. einen Winkel von 90 ± 10 Winkelgraden ein. Der zwischen der Freifläche (158) und der Unterseite (154) eingeschlossene Winkel beträgt z.B. 20 ± 5 Winkelgrade. Die Räumfläche (157) hat eine Höhe von z.B. 0,5 Millimeter, während die Freifläche eine Tiefe von 1 bis 1,5 Millimeter hat. Die Räumstege verlaufen im Wesentlichen radial von innen nach außen. Innen beginnen sie in unmittelbarer Nähe der zentralen Ausnehmung (143). Außen enden sie im Bereich der Außenwandung (141). Nach Figur 11 tangieren die Räumkanten (156) einen gedachten Kreis (148), dessen Durchmesser kleiner oder gleich dem Durchmesser der Ausnehmung (143) ist. Die Räumkanten (156) sind hier negativ geneigt, so dass ihr inneres Ende von einem Radiusstrahl weiter entfernt ist als ihr äußeres Ende. Bei Figur 12 ist dies umgekehrt.

In der Figur 13 werden nur zwei, radial orientierte Räumstege (155) verwendet. Hier erstrecken sie sich bis in den Bereich der Mitnahmelaschen (146). Allerdings reichen die Räumstege (155) hier nicht bis an die Ausnehmung heran. Der Abstand beträgt z.B. 1 Millimeter.

Auf der Unterseite sind im Bereich der Mitnahmelaschen (146), bei denen keine Räumstege (155) enden, kegelstumpfförmige Stützfüße (159) angeordnet. Die Höhe der Stützfüße ist 0,1 bis 0,2 Millimeter kleiner als die Höhe der Räumstege (155).

Die Räumstege (155) können nahezu alle möglichen Querschnitte haben, z.B. können sie die Form eines gleichseitigen Dreieckes, eines Rechtecks, eines Quadrates, eines Kreisabschnitts u.s.w. haben. Zugleich kann die Räumkante (156) - wie in den Figuren 11 bis 13 - eine Gerade sein oder eine sichelförmige, spiralförmige, s-förmige oder sonstige stetige oder unstetige Kurve. Auch können die Räumkanten (156) bereichsweise unterbrochen sein, wobei dann die Unterbrechungen von Räumkante (156) zu Räumkante (156) radial verlagert sind.

Ggf. kann der Boden (140) nicht als Scheibe, sondern als Stern oder Vieleck ausgebildet sein.

Die Klebstoffpatrone (40) ist im Wesentlichen ein zylindrisches Rohr (41), das an seinen beiden ebenen Stirnseiten, die zudem normal zur Mittellinie (5) ausgerichtet sind, jeweils mit einer PE-beschichteten Aluminiumfolie (42, 43) als Deckfolie versiegelt ist. Die Aluminiumfolie (42, 43) stellt als Ganzes eine Sollbruchstelle dar. Ggf. kann sie jedoch auch spezielle Perforationen oder kerbenartige Dünnstellen geringerer Reißfestigkeit aufweisen.

Das Rohr (41), es ist aus PE-HD gefertigt, hat z.B. einen Außendurchmesser von 8 mm und eine Wandstärke von z.B. 0,9 mm. Es ist - nach dem Ausführungsbeispiel - mit ca. 0,3 bis 0,4 Milliliter Klebstoff befüllt.

Nach Figur 4 ist die Klebstoffpatrone (40) z.B. mittig durch einen Zwischenboden (45) geteilt. Der Zwischenboden (45), den der Verdrängerkörper (50) durchstoßen kann, hat eine Wandstärke von z.B. 0,1 bis 0,2 Millimeter. Seine Reißfestigkeit entspricht mindestens der Reißfestigkeit der Deckfolien (42, 43). Auch der Zwischenboden (45) kann zusätzlich Perforationen oder Dünnstellen aufweisen.

Mit Hilfe des Zwischenbodens (45) kann der Klebstoff gezielt an die obere (101) und die untere Deckplatte (111) verteilt werden.

Bei bestimmten Dübelgrößen und/oder besonderen Stützkernwerkstoffen kann auch eine Klebstoffpatrone (40) verwendet werden, die keinen Zwischenboden (45) aufweist.

Der Klebstoff ist beispielsweise ein einkomponentiger feuchtigkeitshärtender Reaktionskleber auf Polyurethanbasis. Durch den Einfluss von Feuchtigkeit härtet der Klebstoff, unter leichtem Aufschäumen, zu einem wasserfesten, zähharten Klebstofffilm aus. Die Abbindezeit für eine z.B. 40%-ige Aushärtung liegt bei einer Raumtemperatur von 20°C bei fünf bis fünfzehn Minuten. Die Viskosität beträgt 7000 ± 2000 mPA*s.

Ggf. sind dem Klebstoff dünne, kurze Kunststofffasern beigemengt. Die Kunststofffasern sind jeweils kürzer als ein Millimeter. Sie haben einen Durchmesser von ca. 40 Mikrometern. Der Volumenanteil der Kunststoffasern beträgt mindestens 15 Prozent.

Die Klebstoffpatrone (40) ist zwischen den Dichtzungen (28) des Rohrabschnitts (11) und der Stumpfstirnfläche (152) des Bodens (140) in Axialrichtung mit wenig oder keinem Spiel eingespannt.

Der einteilige, z.B. aus dem Kunststoff ABS gefertigte Verdrängerkörper (50) weist außen vier größere Zonen auf, eine obere Klemmzone (52), eine Keilzone (61), eine Rückströmzone (65) und eine untere Haltezone (75). Durch die oberen drei Zonen erstreckt sich eine zentrale Ausnehmung (85), die in der unteren Haltezone (75) endet.

Die obere Klemmzone (52), sie steckt nach der Montage verklemmt in der Bohrung (105) der oberen Deckplatte (101), hat zumindest annähernd eine zylindrische Form. Die Außenwandung dieser Form ist stark strukturiert. Sie hat beispielsweise zwei Umlaufkerben (54) zwischen drei zumindest teilweise geschlossenen, umlaufenden Umlaufstegen (53), die durch z.B. vier am Umfang äquidistant verteilte vertikale Klemmstege (55) unterbrochen werden.

Im Bereich der Keilzone (61) verjüngt sich der Verdrängerkörper (50) um ca. 55% seines Außendurchmessers. Der Kegelwinkel entspricht 38 Winkelgraden. Auf der kegelstumpfförmigen Oberfläche der Keilzone (61) sind vier äquidistant verteilte Keilelemente (62) angeformt. Diese, sich nach unten zuspitzenden Keilelemente (62), haben eine plane Oberfläche (63) und sind um z.B. 6 Winkelgrade gegen die Mittellinie (5) geneigt, wobei die jeweiligen Spitzen der Keilelemente (62) den kürzesten Abstand zur Mittellinie (5) haben.

Bei einem montierten Dübel sitzen die Keilelemente (62) in den gespreizten Längsschlitzen (27) zwischen den Hintergriffselementen (22), wobei sich die unteren Spitzen der Keilelemente (62) im Grund der v-förmig aufgedehnten Längsschlitze (27) befinden. An ihren seitlichen Wandungen liegen dann die Seitenflanken der Hintergriffselemente (22) verdrehsichernd und beispielsweise dicht an.

Unterhalb der Keilzone (61) befindet sich die Rückströmzone (65). Der mittlere Bereich dieser Rückströmzone (65) ist ein Zylinderabschnitt (71), an dem vier äquidistant auf dem Umfang verteilte Kupplungsstege (72) angeordnet sind. Die Kupplungsstege (72) beginnen mittig versetzt unterhalb der Keilelemente (62), vgl. Figuren 1 und 2, und enden im unteren Bereich der Haltezone (75) des Verdrängerkörpers (50).

Im Zylinderabschnitt (71) wird ggf. mindestens eine umlaufende Ringnut einarbeitet, deren Tiefe am größten Durchmesser des Zylinderabschnitts (71) bis zu 0,5 Millimeter beträgt. In der Ringnut sammelt sich beim Setzen des Klebedübels Klebstoff (9), um die klebende Verbindung zum Rohr (41) zu verbessern.

In den Figuren 1 und 2 befindet sich am Übergang der Zonen (61) und (65) ein kegelstumpfmantelförmiger Sperrring (66), der die Kupplungsstege (72) ausspart. Der Sperrring (66) hat z.B. einen Kegelwinkel von 30 Winkelgraden. Die theoretische Spitze des Kegelmantelstumpfes liegt auf der Mittellinie (5) im Bereich der Haltezone (75). Zwischen dem Sperrring (66) und den Keilelementen (62) befindet sich eine Ringnut (68). Zu den Keilelementen (62) hin hat der Sperrring (66) eine z.B. plane Stützfläche (67).

Der unterste Bereich des Verdrängerkörpers (50) ist die Haltezone (75). In ihr setzen sich die Kupplungsstege (72) nach unten hin fort. Jeder zweite Kupplungssteg (72) ist dabei - zur Ausbildung einer Wellen-Naben-Kupplung - verbreitert ausgeführt, vgl. Figuren 5 und 6.

In Figur 5 sind die Stegverbreiterungen (93) der Kupplungsstege (72) mit einem dreieckigen Einzelquerschnitt versehen. Diese Stegverbreiterungen (93) greifen mit ihren Abstütz- (96) und Halteflanken (97) bereichsweise in die Kanäle (24) ein. Sie füllen hierbei die Kanäle (24) nur teilweise aus. Rotiert nun der Verdrängerkörper (10) beim Setzen um seine Mittellinie (5) in der Dübeldrehrichtung (7), legen sich die Abstützflanken (96) an der nächstgelegenen Kanalkante (26) an und drehen den Zylinderkörper (10) mit.

Nach Figur 6 werden Stegverbreiterungen (95) benutzt, deren Einzelquerschnitte viereckig gestaltet sind. Hier legt sich die Stegverbreiterung mit ihrer Abstützflanke (96) großflächig an der seitlichen Wandung des Kanals (24) an. Zugleich kontaktiert die Halteflanke (97) die andere Wandung des Kanals (24). Die Kontaktfläche ist hier z.B. etwas geringer. Obwohl zwischen der Rückenflanke (98) der Stegverbreiterung (95) und der restlichen Wandung des Kanals (24) mehr als die Hälfte des Kanalquerschnitts - zum späteren Transport des Klebstoffs - frei bleibt, sitzt hier der Verdrängerkörper (50) in Rotationsrichtung drehstarr und spielfrei im Zylinderkörper (10).

An der unteren Stirnfläche (83) sind zum Aufreißen der oberen Deckfolie (42) des Klebstoffbehälters (40) zwei schneidenförmige Spitzen (73) angeformt, die ca. 2,5 Millimeter über die Stirnfläche (83) nach unten überstehen. Die einander diagonal gegenüberliegenden Außenflächen haben einen Abstand, der geringfügig kleiner ist als der Innendurchmesser des Rohres (41) der Klebstoffpatrone (40).

Oberhalb der Stirnfläche (83) befindet sich zwischen je zwei Spitzen (73) ein ca. 0,45 mm radial nach außen abstehender Rastvorsprung (78).

In der oberen Stirnfläche (51) ist zur Aufnahme eines Befestigungselements eine zentrale, zumindest bereichsweise kegelstumpfmantelförmige Ausnehmung (85) angeordnet, deren Mittellinie sich mit der Mittellinie (5) deckt, vgl. Figur 2. Die Ausnehmung (85) hat drei oder mehr radial nach innen ragende Stege (86), die kurz vor der Haltezone (75) enden. Zwischen der Stirnfläche (51) und der Ausnehmung (85) befindet sich z.B. eine 0,9x45°-Fase.

Die Ausnehmung (85) hat im oberen Bereich - ohne die Stege (86) zu berücksichtigen - z.B. einen Durchmesser von 4,2 mm. Der dort zwischen den Stegen (86) liegende Inkreis hat einen Durchmesser von ca. 2 bis 3 mm, wobei die Stege (86) oben eine Breite von ca. 2,5 mm aufweisen. Die Vorderkanten der Stege (86), sie liegen am Inkreis an, verlaufen also parallel zur Mittellinie (5).

Die Befestigungselemente sind beispielsweise Spanplattenschrauben der in Millimeter angegebenen Größe 3,5 x 25 oder 4 x 25.

Selbstverständlich kann die Ausnehmung (85) auch nahezu jeden anderen Querschnitt haben, z.B. einen ovalen, einen polygonalen, einen vieleckigen, einen sternförmigen oder dergleichen. Auch kann die Ausnehmung nur die Form eines kurzen, geraden Kegels haben. In diesem Fall muss sich das Befestigungselement den größten Teil der haltenden Bohrung selbst erzeugen.

Im Ausführungsbeispiel dient die Ausnehmung (85) zum einen zum maschinellen Aufnehmen des Klebedübels für den Dübelsetzvorgang. Zum anderen hat sie die Aufgabe, das Befestigungselement, z.B. eine der o.g. Schrauben, zu führen, damit dieses beim Einschrauben nicht von der Mittellinie (5) wegwandert.

Zum Befestigen des Klebedübels in der Bohrung (130) der Leichtbauplatte (100) wird dieser in der Regel in einem Hub eingedrückt. Zumindest bei einem Teil dieses Hubs rotiert dabei der Klebedübel um seine Längsachse. Durch das Aufspreizen der Hintergriffselemente (22) und durch die Gestalt der Klemmzone (52) sitzt der Dübel auch schon vor dem endgültigen Aushärten des Klebstoffs genügend fest und sicher in der Bohrung (130).

Im folgenden Text wird das Fixieren des Dübels in einzelnen separaten Schritten beschrieben, obwohl sich dieser Vorgang in nur einem einzigen, kontinuierlichen Eindrückhub abspielt.

Die Figur 4 zeigt einen Dübel im Handelszustand, der in einem ersten Schritt in die vorgefertigte Bohrung (125) der Leichtbauplatte (100) eingesteckt ist. Der Zylinderkörper (10) liegt auf der innen liegenden Oberfläche (113) der unteren Deckplatte (111) auf. Die obere Stirnfläche (12) des Zylinderkörpers (10) liegt hierbei z.B. 0,5 mm unterhalb der innen liegenden Oberfläche (103) der oberen Deckplatte (101). Im Zylinderkörper (10) sitzt die noch verschlossene Klebstoffbehälter (40). Oberhalb der Klebstoffpatrone (40) steckt der Verdrängerkörper (50) über seine Haltezone (75) im Hintergriffsbereich (21) des Zylinderkörpers in seiner ersten Position. Seine Spitzen (73) berühren nicht die Klebstoffpatrone (40).

Der Hub erfolgt beispielsweise zunächst ohne eine Dübelrotation. Letztere setzt erst ein, wenn der Boden (140) des Klebedübels bzw. die Räumstege (155) nur noch ca. drei Millimeter von der Oberfläche (113) der unteren Deckplatte (111) entfernt ist bzw. sind. Der Klebedübel rotiert dann mit einer Drehzahl von 180 bis 900 Umdrehungen pro Minute z.B. im Gegenuhrzeigersinn. Auf dem letzten Millimeter seines Hubs räumen die Räumstege (155) noch an der Oberfläche (113) anhaftende Rückstände des Stützkerns (121) und des Klebers weg, mit dem der Stützkern (121) mit der Deckplatte (111) im Bereich der Bohrung (130) verbunden war. Die Rückstände werden zur Seite hin verdrängt oder - z.B. bei einer großzelligen Pappwabenstruktur - zur Seite geschleudert. Sobald der Dübel die in Figur 4 dargestellte Endlage erreicht hat, hält die Dübelrotation noch einige Sekunden an.

In einem zweiten Schritt wird der Verdrängerkörper (50) in Richtung der Vorwärtsbewegung (6) in den Zylinderkörper (10) hineingeschoben. Dabei drücken die Sperrflächen (77) die Hintergriffselemente (22) auseinander. Die schneidenförmigen Spitzen (73) reißen die obere Deckfolie (42) des Klebstoffbehälters (40) auf. Der flüssige Klebstoff aus dem oberen Behälterbereich (46) wird über die Längsschlitze (27) und die Kanäle (24) nach oben in Richtung obere Deckplatte (101) verdrängt. Der zweite Schritt ist beendet, wenn die Spitzen (73) den Zwischenboden (45) erreicht haben.

In einem dritten Schritt drückt der sich weiter nach unten bewegende Verdrängerkörper (50) das Rohr (41) über den Zwischenboden (45) mit großer Kraft gegen den Pyramidenstumpf (151) des Bodens (140). Dadurch reißt dort die untere Deckfolie (43) auf. Das Rohr (41) schlägt gegen die Oberseite (144) des Bodens (140). Durch den sich dadurch ergebenden Bremsruck reißen die Spitzen (73) den Zwischenboden ein oder ab. Nun wird auch Klebstoff nach unten zur unteren Deckplatte (111) hin verdrängt. Er strömt über die Ausnehmung (143) und die Aussparungen (142) in den Bereich des unteren Stützkerns (121).

In einem vierten Schritt spreizen zunächst der Sperrring (66) und dann die Keilelemente (62) die Hintergriffselemente (22) auf. Dabei haben die Führungszapfen (13) angefangen, zur Stirnfläche (12) der Hintergriffselemente (22) hin einzuknicken. In diesem Schritt wird weiterhin ein Teil der Klebstoffmenge nach oben gefördert. Die Förderung ist erst beendet, wenn die Dichtzungen (28) über die Stützfläche (67) in die Ringnut (68) einrasten. Gleichzeitig verhindern die Dichtzungen (28) großteils ein Zurückfließen des Klebstoffs in die unteren Bereiche des Dübels.

Die Dübelmontage ist beendet, wenn sich die Hintergriffselemente (22) durch die Keilzone (61) maximal gespreizt haben, vgl. Figur 7. Die Führungszapfen (13) - hier nicht sichtbar - haben sich nahezu vollständig gegen die Stirnfläche (12) angelegt und drücken von unten her gegen die innen liegende Oberfläche (103) der oberen Deckplatte (101).

Während des vierten Schritts wurde die Klemmzone (52) in die Bohrung (105) eingepresst. Dabei verkrallen sich die Umlaufstege (53) in den unteren Schichten der Deckplatte (101), während sich die oberen Bereiche der Klemmstege (55) in der, in der Regel härteren, Oberflächenschicht der Deckplatte (101) einkerben.

Einige Zeit später, z.B. nach ca. fünf Minuten, hat der Klebstoff für eine Vormontage ausreichend abgebunden. In die z.B. aus zäh elastischem Kunststoff gefertigte Einheit kann dann, auch schon während des weiteren Aushärtens, eine Schraube eingedreht werden.

Die obere Stirnfläche (51) der Klemmzone (52) liegt im Ausführungsbeispiel in der Ebene der außen liegenden Deckplattenoberfläche (102). In der Praxis liegt die Stirnfläche (51) meist ein bis zwei Zehntel Millimeter unterhalb der oben genannten Ebene.

Bei allen gezeigten Klebedübeln besteht die Möglichkeit, den Zylinderkörper (10) zu verlängern und in eine in die untere Deckplatte (111) gebohrte Sacklochbohrung hineinragen zu lassen, vgl. DE 10 2006 049 954 A1.

Die bisher beschriebenen Öffnungselemente (73, 151) sind spitze Kunststoffteile des Verdrängerkörpers (50) und des Bodens (140). Selbstverständlich können diese auch durch eingespritzte oder eingelegte scharfkantige Teile, wie z.B. Skalpellklingen oder dergleichen, ersetzt werden.

### Bezugszeichenliste:

- 5: Mittellinie des Klebedübels, Längsachse
- 6: Vorwärtsbewegung, Dübelsetzrichtung
- 7: Dübeldrehrichtung
- 10: Zylinderkörper
- 11: Rohrabschnitt, 1. Bereich
- 12: Stirnfläche, oben, hinten
- 13: Führungszapfen
- 14: Taille
- 16: Ausnehmung, Öffnung von (10)
- 17: Innenraum von (10)
- 21: Hintergriffsbereich
- 22: Hintergriffselemente
- 23: Stützflächen
- 24: Kanal, Kupplungsnut
- 25: Hintergriffsflächen
- 26: Kanalkanten
- 27: Längsschlitze
- 28: Dichtzungen, elastisch
- 31: Patronenlager, 2. Bereich
- 32: Gelenkzone
- 36: Bodenarretierbereich, 3. Bereich
- 37: Zungen, Öffnungen von (10)
- 38: Eindrehungen
- 39: Längsschlitze
- 40: Klebstoffbehälter, Klebstoffpatrone
- 41: Rohr
- 42: Deckfolie, oben; öffenbare Oberseite, Aluminiumfolie, Sollbruchstelle
- 43: Deckfolie, unten; öffenbare Unterseite, Aluminiumfolie, Sollbruchstelle
- 45: Zwischenboden, Sollbruchstelle
- 46: oberer Klebstoffbereich
- 47: unterer Klebstoffbereich
- 50: Verdrängerkörper
- 51: Stirnfläche, oben
- 52: Klemmzone
- 53: Umlaufstege
- 54: Umlaufkerben
- 55: Klemmstege
- 61: Keilzone
- 62: Keilelemente
- 63: Oberfläche
- 65: Rückströmzone
- 66: Sperrring
- 67: Stützfläche
- 68: Ringnut
- 70: Wellen-Naben-Verbindung
- 71: Zylinderabschnitt
- 72: Kupplungsstege
- 73: Spitzen, schneidenförmig, Öffnungselement
- 75: Haltezone
- 76: Halteflächen
- 77: Sperrflächen
- 78: Rastvorsprünge
- 83: Stirnfläche, unten, vorn
- 85: Ausnehmung, zentral
- 86: Stege, Radialstege
- 93: Stegverbreiterung, dreieckiger Querschnitt
- 95: Stegverbreiterung, viereckiger Querschnitt
- 96: Abstützflanke
- 97: Halteflanke
- 98: Rückenflanke
- 100: Sandwichplatte, Leichtkern-Verbundplatte; flächiges Bauteil in Stützkernbauweise
- 101: Deckplatte, oben
- 102: außen liegende Oberfläche
- 103: innen liegende Oberfläche
- 105: Bohrung
- 111: Deckplatte, unten
- 113: innen liegende Oberfläche
- 121: Stützkern, Wabenkern, Schaumstoffkern
- 125: Bohrung
- 130: Gesamtbohrung, Ausnehmung
- 140: Boden, Zylinderboden
- 141: Außenwandung
- 142: Spalte, u-förmig; Öffnungen von (10) Montagefuge
- 143: Ausnehmung, kreisrund; Öffnung von (10)
- 144: Oberseite
- 146: Mitnahmelaschen, vier
- 148: Kreis
- 151: Pyramidenstumpf, Öffnungselemente
- 152: Stumpfstirnfläche
- 153: Kanäle
- 154: Unterseite, Außenseite
- 155: Räumstege
- 156: Räumkante
- 157: Räumfläche
- 158: Freifläche
- 159: Stützfüße, zwei

## Patentansprüche

1. Dübel zur Verwendung in einer mit einer oberen (101) und unteren Deckplatte (111) ausgestatteten Leichtbauplatten (100) aus einem mit einem Boden (140) versehenen Zylinderkörper (10), einem Verdrängerkörper (50) und einem mit Sollbruchstellen ausgestatteten Klebstoffbehälter (40), wobei der Zylinderkörper (10) mindestens zwei Hintergriffselemente (22) aufweist, die durch das Einschieben des Verdrängerkörpers (50) in eine Bohrung (130) der Leichtbauplatte (100), die obere Deckplatte (101) hintergreifend, aufgespreizt werden und wobei der Klebstoffbehälter (40) in einem mit mehreren Öffnungen (16, 142, 143) versehenen Innenraum (17) des Zylinderkörpers (10) sitzt, **dadurch gekennzeichnet,**
- **dass** der befüllte Klebstoffbehälter (40) - im Handelszustand - im Zylinderkörpers (10) zwischen dem Boden (140) und dem Verdrängerkörper (50) angeordnet ist,
- **dass** der Verdrängerkörper (50) und der Zylinderkörper (10) über einen Teilbereich ihrer Länge eine Wellen-Naben-Verbindung (70) aufweisen, um eine drehstarre längsbeweglich Kupplung zu bilden,
- **dass** an der Außenseite (154) des Bodens (140) mindestens ein Räumsteg (155) angeordnet ist, durch den beim Dübelsetzvorgang durch ein Rotieren des Dübels die untere Deckplatte (111) in dem Bereich, der unter dem Boden (140) des Dübels liegt, also an der Stelle, an der der Boden (140) mit der Deckplatte (111) verklebt wird, reinigbar ist und
- **dass** sich der mindestens eine Räumstege (155) von innen nach außen erstreckt, wobei er innen an einer zentralen Ausnehmung (143) beginnt und außen im Bereich der Außenwandung (141) des Bodens (140) endet.

2. Dübel gemäß Anspruch 1, **dadurch gekennzeichnet, dass** der Räumsteg (155) eine Räumkante (156) hat, die zumindest bereichsweise in einer Ebene liegt, die quer zur Mittellinie (5) des Dübels orientiert ist.

3. Dübel gemäß Anspruch 1, **dadurch gekennzeichnet, dass** die Räumkante (156) eine Gerade ist.

4. Dübel gemäß Anspruch 1, **dadurch gekennzeichnet, dass** die einzelne Räumkante (156) im Wesentlichen radial von innen nach außen verläuft und dabei innen einen Kreis (148) tangiert, dessen Mittelpunkt auf der Mittellinie (5) liegt und dessen Durchmesser 2 bis 5 Millimeter beträgt.

5. Dübel gemäß Anspruch 1, **dadurch gekennzeichnet, dass** zur Ausbildung einer Wellen-Naben-Verbindung (70) der Verdrängerkörper (50) mindestens einen Kupplungssteg (72) aufweist, der in eine in den Zylinderkörper (10) eingearbeitete Kupplungsnut (24) form- und/oder kraftschlüssig eingreift.

6. Dübel gemäß Anspruch 1, **dadurch gekennzeichnet, dass** der Zylinderkörper (10) aus einem Rohrabschnitt (11) und einem Boden (140) besteht.

7. Dübel gemäß Anspruch 1, **dadurch gekennzeichnet, dass** - im Handelszustand - der Boden (140) im Zylinderkörper (10) in axialer und in radialer Richtung sowie in Umfangsrichtung kraft-, form- und/oder stoffschlüssig angeordnet sind,

8. Dübel gemäß Anspruch 1, **dadurch gekennzeichnet, dass** der Klebstoffbehälter (40) ein zylindrisches Rohr (41) ist, das an seinen Stirnseiten mit gas- und flüssigkeitsdichten Folien (42, 43) verschlossen ist.

9. Dübel gemäß Anspruch 8, **dadurch gekennzeichnet, dass** die gas- und flüssigkeitsdichten Folien (42, 43) eine Reißfestigkeit haben, die unter 10 N/mm² liegt.

10. Dübel gemäß Anspruch 1, **dadurch gekennzeichnet, dass** der Klebstoffbehälter (40) mit einem einkomponentigen feuchtigkeitshärtenden Reaktionskleber auf Polyurethanbasis befüllt ist.

## Claims

1. Anchor plug for use in multi-layer lightweight building boards having upper and lower cover plates (101 and 111, respectively), said anchor plug comprising a cylindrical body (10) having an end panel (140), a displacement body (50) and a container (40) holding an adhesive and provided with predetermined breakpoints, said cylindrical body (10) having at least two grip-behind elements (22) adapted to be spread apart and to engage the upper cover plate (101) at the underside thereof as the displacement body (50) is advanced through a hole (130) in the lightweight building board (100), and with the adhesive container (40) being seated in an internal cavity (17) in the cylindrical body (10), said cavity having a plurality of openings (16, 142, 143) therefrom, **characterized in that**:
- the adhesive container (40), when filled and in the commercially available condition of the device, is disposed in the cylindrical body (40) between the end panel (140) thereof and the displacement body (50);
- the displacement body (50) and the cylindrical body (10) comprise a shaft-to-hub connection (70) extending along parts of their lengths, said connection configured to form a rotationally rigid and longitudinally movable coupling structure;
- at least one clearing rib (155) is disposed on the outside (154) of the end panel (140) and adapted to clean the lower cover plate (111) in the area below the end panel (140) of the anchor plug by rotating the anchor plug as it is being placed, i.e. where the end panel (140) will be adhesively bonded to the cover plate (111); and
- **in that** said at least one clearing rib (155) extends outwardly from an inside position, beginning at an inner central recess (143) and terminating outside in the area of the outside wall (141) of end panel (140).

2. Anchor plug as claimed in claim 1, **characterized in that** the clearing rib (155) has a clearing edge (156) disposed at least section-wise in a plane oriented transversely of the center line (5) of the anchor plug.

3. Anchor plug as claimed in claim 1, **characterized in that** the clearing edge (156) defines a straight line.

4. Anchor plug as claimed in claim 1, **characterized in that** a single clearing edge (156) extends in a substantially radial direction from the inside out and tangent at its inner end to a circle (148) of which the center lies on center line (5) and of which the diameter is 2 to 5 mm.

5. Anchor plug as claimed in claim 1, **characterized in that**, for forming a shaft-to-hub connection (70), the displacement body (50) has at least one coupling rib (72) engaging a groove (24) machined in cylindrical body (10) to form a shape- or force-locked connection.

6. Anchor plug as claimed in claim 1, **characterized in that** the cylindrical body (10) comprises a tubular section (11) and an end panel (140).

7. Anchor plug as claimed in claim 1, **characterized in that** - in the commercially available condition thereof - the end panel (140) is placed inside the cylindrical body (10) in a manner to form a force-, shape- or material-locked connection in the axial and the radial and the circumferential directions.

8. Anchor plug as claimed in claim 1, **characterized in that** adhesive container (40) comprises a cylindrical tube (41) sealed at its ends by gas- and liquid-tight films (42, 43).

9. Anchor plug as claimed in claim 8, **characterized in that** the gas- and liquid-tight films (42, 43) have a tear strength lower than 10 N/mm².

10. Anchor plug as claimed in claim 1, **characterized in that** adhesive container (40) is filled with a polyurethane-based single-component moisture-curing reaction adhesive.

## Revendications

1. Cheville conçue pour être utilisée dans une plaque de construction légère (100) équipée de plaques de couverture supérieure (101) et inférieure (111) et consistant en un corps de cylindre (10) pourvu d'un fond (140), en un corps de déplacement (50) et en un réservoir de colle (40) comportant des emplacements de rupture de référence, le corps de cylindre (10) présentant au moins deux éléments de préhension arrière (22) qui passent derrière la plaque de couverture supérieure (101) et s'écartent par l'insertion du corps de déplacement (50) dans un perçage (130) de la plaque de construction légère (100), et le récipient de colle (40) se trouvant dans un espace intérieur (17) muni d'une pluralité d'ouvertures (16, 142, 143) du corps de cylindre (10),**caractérisée en ce**
- **que** le réservoir de colle rempli (40),prêt à l'emploi, est disposé dans le corps de cylindre (10) entre le fond (140) et le corps de déplacement (50),
- **que** le corps de déplacement (50) et le corps de cylindre (10) présentent une liaison arbre-moyeu (70) dans une partie de leur longueur pour former un accouplement anti-rotation mobile dans le sens longitudinal,
- **que** l'extérieur (154) du fond (140) comporte au moins une saillie de nettoyage (155) qui, par la rotation de la cheville lors de la pose de la cheville, permet de nettoyer la plaque de recouvrement inférieure (111) dans la zone qui se trouve sous le fond (140) de la cheville, à l'endroit où le fond (140) est collé à la plaque de recouvrement (111), et
- **que** la dite au moins une saillie de nettoyage (155) s'étend de l'intérieur vers l'extérieur, en partant à l'intérieur d'un évidement central (143) et en terminant à l'extérieur au niveau de la paroi extérieure (141) du fond (140).

2. Cheville selon la revendication 1, **caractérisée en ce que** la saillie de nettoyage (155) possède une arête de nettoyage (156) qui est située, au moins par endroits, dans un plan orienté perpendiculairement à l'axe central(5) de la cheville.

3. Cheville selon la revendication 1, **caractérisée en ce que** l'arête de nettoyage (156) forme une ligne droite.

4. Cheville selon la revendication 1, **caractérisée en ce que** chaque arête de nettoyage (156) est dirigée essentiellement radialement de l'intérieur vers l'extérieur en étant tangent à un cercle (148) dont le point central se trouve sur l'axe central (5) et qui a un diamètre de 2 à 5 millimètres.

5. Cheville selon la revendication 1, **caractérisée en ce que** le corps de déplacement (50), pour former une liaison arbre-moyeu (70), présente au moins une nervure d'accouplement (72) qui est en prise, par engagement positif et/ou par adhérence, dans une rainure d'accouplement (24) intégrée dans le corps de cylindre (10).

6. Cheville selon la revendication 1, **caractérisée en ce que** le corps de cylindre (10) comprend un tronçon de tube (11) et un fond (140).

7. Cheville selon la revendication 1, **caractérisée en ce que**, la cheville étant prête à l'emploi, le fond (140) est disposé dans le corps de cylindre (10) en direction axiale et radiale ainsi qu'en direction circonférentielle par adhérence, par engagement positif ou par liaison de matière.

8. Cheville selon la revendication 1, **caractérisée en ce que** le récipient de colle (40) est un tube cylindrique (41) qui est fermé à ses extrémités par des feuilles étanches aux gaz et aux liquides (42, 43).

9. Cheville selon la revendication 8, **caractérisée en ce que** les feuilles étanches aux gaz et aux liquides (42, 43) présentent une résistance à la déchirure inférieure à 10 N/mm².

10. Cheville selon la revendication 1, **caractérisée en ce que** le réservoir de colle (40) est rempli d'une colle réactive monocomposante durcissable à l'humidité à base de polyuréthane.
